# EUROPEAN PATENT APPLICATION

(11) **EP 4 670 942 A1**
(43) Date of publication of application: **31.12.2025**
(21) Application number: 24185052.8
(22) Date of filing: 27.06.2024
(51) Int. Cl.: B29B 17/02, B29K 105/06, B32B 43/00

(54) **APPARATUS AND METHOD FOR SEPARATING AT LEAST ONE FIBER LAYER FROM A MULTILAYER FIBER COMPOSITE MATERIAL**

(71) Applicant: Fraunhofer-Gesellschaft zur Förderung der angewandten Forschung e.V., 80686 München (DE)
(72) Inventor: IMBERT, Mathieu, 79104 Freiburg (DE); STRAHRINGER, Simeon, 79104 Freiburg (DE)
(74) Representative: 2SPL Patentanwälte PartG mbB

(57) **Abstract**

There is disclosed a concept for separating at least one fiber layer 10 from a multilayer fiber composite material 13, wherein the fiber layer 10 is one of a plurality of fiber layers embedded in a matrix material of the fiber composite material 13, the method comprising applying, during a separation of the fiber layer 10, a curvature; 11 to the fiber layer 10 or to the multilayer fiber composite material 13 around an axis 16 parallel to a direction of crack propagation 12.

## Description

### Field

The present disclosure generally relates to a method and apparatus for separating at least one fiber layer from a multi-layer fiber composite material, and more particularly to controlling the curvature of the material during the separation process.

### Background

Multi-layer composites are materials consisting of different layers of fibrous reinforcements embedded in a polymeric matrix. These are expensive and high-performance materials which require high amounts of energy for their production. Recycling of multi-layer fiber composite materials involves processes designed to reclaim and reuse valuable fibers and matrix materials from these composites, which may be used in industries such as aerospace, automotive, and construction due to their high strength-to-weight ratios and durability. Recycling multi-layer fiber composite materials may be a complex process that requires careful handling and advanced technologies to ensure that the recovered materials retain their desirable properties and can be effectively reused in new applications.

Some classical and today industrially mature approaches for composite recycling are:
(1) shredding, which comprises fragmenting the composites and enables, in the case of thermoplastic composites, to produce chips of powder which can be reused in thermocompression or injection processes,
(2) pyrolysis, which comprises removing the matrix surrounding the fibers at high temperature to recover the fibers; and
(3) solvolysis, which comprises dissolving chemically the matrix to recover the fibers.

Other alternatives, which are less mature, have also been proposed as electrodynamical fragmentation. These processes are pragmatic but feature a disadvantage in that they induce a reduction of the fiber length and a loss of fiber orientation, which are two essential parameters ensuring the high level of mechanical performance of composites. The regained material can therefore not be used for the same application as the original material.

Another approach proposed in the literature is a direct reuse of thermoplastic composites. This approach, limits however strongly the design freedom for the part of the second generation.

Thus, there may be a need for improving resource efficiency of these multi-layer composite materials by enabling a separation of the single layers they consist of in order to enable their reuse.

### Summary

The present disclosure addresses the problem of efficiently separating fiber layers from multilayer fiber composite materials.

This and other objects are solved by the subject matter of the independent claims. Further improvements are given by the dependent claims.

According to a first aspect, the present disclosure proposes a method for separating at least one fiber layer from a multilayer fiber composite material. The fiber layer is one of a plurality of fiber layers embedded in a matrix material of the fiber composite material. The method includes applying, during a separation of the fiber layer, a curvature to the fiber layer or to the multilayer fiber composite material around an axis parallel to a direction of crack propagation. This may enhance a bending stiffness of the fiber layer and/or the multilayer fiber composite material. This increased stiffness may allow for higher peeling forces to be applied without causing damage to the fibers. This may be beneficial for a recovery of thin and flexible single-layers of carbon fiber-based composites, which may be economically valuable but prone to damage under low peeling forces. By curving the crack front and increasing the bending stiffness, the separation process can be conducted more efficiently and effectively, ensuring the integrity and usability of the recovered material.

In some embodiments, the curvature applied to the fiber layer or to the multilayer fiber composite material is convex relative to the direction of crack propagation. Curvature is a measure of how much a curve deviates from being a straight line or, in the context of surfaces, how much a surface deviates from being flat. It quantifies the rate of change of the direction of a curve as you move along it. A convex curvature is a specific type of curvature that indicates a surface or curve is curving outward, away from its interior. Specifically, a convex curvature may help distribute stress more evenly along the crack front, which can prevent premature failure or damage to the fibers during separation, ensuring the integrity and usability of the recovered composite layers.

In some embodiments, the curvature applied to the fiber layer or to the multilayer fiber composite material is concave relative to the direction of crack propagation. A concave curvature is a type of curvature that indicates a surface or curve is curving inward, towards its interior, indicating a shape that caves in rather than bulges out. Also, a concave curvature may help distribute stress more evenly along the crack front, which may enhance the material's resistance to peeling forces.

In some embodiments, the curvature applied to the fiber layer or to the multilayer fiber composite material is constant during the separation of the fiber layer. This may ensure a uniform distribution of stress along the crack front. This uniform stress distribution may reduce the likelihood of localized damage or premature failure, allowing for a more controlled and effective separation process.

In some embodiments, the curvature applied to the fiber layer or to the multilayer fiber composite material is variable during the separation of the fiber layer. This may allow for an adaptation of the curvature to the specific requirements of the material and the separation process. This variability may enhance control over the stress distribution along the crack front, minimizing the risk of localized damage and improving the efficiency of the separation process. By adjusting the curvature dynamically, the process can be optimized for different materials and conditions, ensuring better preservation of the fibers and higher quality of the recovered layers.

In some embodiments, the curvature applied to the fiber layer or to the multilayer fiber composite material is constant along a width of the fiber layer. This may ensure a uniform distribution of stress across an entire width of the material. This uniformity may reduce a likelihood of localized stress concentrations, which can cause damage or premature failure of the fibers. Consequently, the separation process may become more controlled and efficient, maintaining the integrity and mechanical properties of the recovered material. This may be particularly beneficial for delicate and high-value composites, such as carbon fiber-based materials, where preserving the quality of the fibers is critical.

In some embodiments, the curvature applied to the fiber layer or to the multilayer fiber composite material is variable along a width of the fiber layer. This may allow for the optimization of stress distribution tailored to specific material properties and separation requirements. A variable curvature can help in better managing the peeling forces and minimizing localized stress concentrations, thereby reducing the risk of damage or premature failure. This adaptability may enhance efficiency and effectiveness of the separation process, ensuring the integrity and quality of the recovered material.

In some embodiments, the method includes applying a force to the fiber layer or to the multi-layer fiber composite material perpendicular to the direction of crack propagation to assist the separation of the fiber layer. The perpendicular force may help to open the crack more effectively, reducing energy required to propagate the crack through the material. As a result, the fibers can be separated more cleanly and with less risk of damage, thereby preserving their structural integrity and enhancing the quality of the recovered material.

In some embodiments, the curvature is applied by a mechanical gripping device bending the fiber layer or the multilayer composite material around the axis parallel to the direction of crack propagation during the separation. This may facilitate the delamination process.

In some embodiments, the method includes gripping the fiber layer with the mechanical gripping device entirely or only partially along the width of the fiber layer. This may refer to a method by which the gripping tool holds the fiber layer. This can either be across the entire width of the fiber layer or only a portion of it, depending on the specific requirements of the separation process. This may allow for flexibility in how the fiber layer is handled during the separation process. By gripping the fiber layer only partially along its width, it is possible to spontaneously generate a curvature in the layer. This curvature helps in managing the stress distribution more effectively during the peeling or delamination process, thereby reducing the risk of damaging the fibers. It can be particularly beneficial for materials that require precise handling to maintain their structural integrity and mechanical properties.

In some embodiments, a position of the mechanical gripping device remains fixed in the direction of crack propagation with respect to the fiber layer during the separation of the fiber layer. This means that during the separation process, the gripping device does not move along the direction in which the crack propagates. Instead, it holds the fiber layer steadily in place, ensuring that the applied forces are focused on aiding the separation. This may provide a stable and consistent application of force. This stability ensures a controlled separation process, reducing the risk of unintended movements or shifts that could cause damage to the fiber layer. By maintaining a fixed position, the force can be more accurately directed to propagate the crack efficiently, thereby preserving the integrity of the fiber layer and improving the quality of the separation process.

In some embodiments, the mechanical gripping device moves along the fiber layer in the direction of crack propagation during the separation of the fiber layer. This means that the gripping tool may actively travel along the length of the fiber layer in the same direction as the crack is spreading. This dynamic movement may help guide and control the separation process. This may allow for a more continuous and controlled separation process. This movement may ensure that the mechanical loading conditions are consistently applied along the entire length of the fiber layer, which can improve the efficiency of the separation and reduce the likelihood of damage to the fibers. By moving with the crack propagation, the device can adapt to the changing conditions of the material, ensuring a cleaner and more precise separation.

In some embodiments, the method includes applying the curvature to the fiber layer or to the multilayer fiber composite material using a roller with a curved profile moving relatively to the fiber layer in the direction of crack propagation during the separation of the fiber layer. This means that a roller with a curved profile may be used to impose a curvature on the fiber layer as it moves along the direction in which the crack is spreading. This curvature may be applied dynamically as the roller moves relative to the fiber layer, assisting in the separation process. The moving roller with a curved profile may provide a continuous and controlled application of curvature during the separation process. This may ensure a stress distribution along the crack front, which may help to prevent localized stress concentrations that could damage the fibers. By maintaining a consistent curvature, the separation process may become more efficient and less likely to cause defects, preserving the integrity and quality of the recovered fiber layers.

In some embodiments, the method further includes dynamically adjusting the curvature during the separation of the fiber layer based on feedback of a separation force and/or of an image analysis tool. This means that the curvature applied to the fiber layer or the multilayer fiber composite material may be continuously modified during the separation process. This adjustment may be guided by real-time feedback on the force being applied to separate the layers and/or on the shape of the layer determined by an image analysis tool, allowing the curvature to be optimized dynamically to suit the changing conditions of the separation process. This may enhance precision and control over the separation process. By continuously adapting the curvature, the method can respond to variations in the material properties and the separation conditions, ensuring that the optimal curvature is applied at all times. This may reduce the risk of damaging the fibers, improves the efficiency of the separation, and ensures a higher quality of the recovered material.

In some embodiments, the method includes adjusting the curvature based on a thickness of the fiber layer. This means that the curvature applied to the fiber layer or the multilayer fiber composite material may be modified according to the measured thickness of the fiber layer. This may ensure that the curvature is optimal for the specific thickness of the material being processed. This may allow for a more tailored and precise application of forces during the separation process. By optimizing the curvature to the specific thickness, the method can ensure that the stress distribution is appropriate for the material, reducing the risk of damage and improving the efficiency of the separation process. This may lead to higher quality and integrity of the recovered fiber layers, as the curvature can be precisely controlled to accommodate varying material properties.

In some embodiments, the separation of the fiber layer is performed at a controlled temperature. This means that during the process of separating the fiber layer from the multilayer composite material, the temperature may be regulated and maintained within a specific range. This controlled temperature may be beneficial to optimize the conditions for separation and ensure the material properties are preserved. This may improve the efficiency and quality of the separation process. By maintaining an optimal temperature, mechanical properties of the fiber layer can be preserved, and a risk of damaging the fibers during separation may be reduced. Controlled temperature may help in managing viscoelastic properties of the polymer matrix, making the separation process smoother and more consistent. This results in higher quality recovered fibers and a more reliable process overall.

In some embodiments, the fiber layer has a thickness of less than 1 mm. This may indicate that an individual fiber layer being separated or processed is thin, with a thickness measurement of less than 1 millimeter. This may enhance flexibility and potential applications of the material. Thin fiber layers can be more easily manipulated and shaped into complex forms without compromising structural integrity.

In some embodiments, the matrix material of the fiber composite material comprises a thermoset or thermoplastic polymer. A thermoset is a type of polymer material that irreversibly cures, or hardens, through a chemical reaction. Once cured, thermoset polymers become rigid and cannot be remelted or reshaped. The curing process typically involves the formation of a three-dimensional network of cross-linked molecules, which gives thermosets their characteristic properties. In some embodiments, the matrix material is selected from the group of the thermosets as for example epoxy, polyester, and polyurethane. Thermoplastic polymers are materials that become moldable upon heating and solidify upon cooling, which can be repeatedly reheated and reshaped. An advantage of using a thermoplastic polymer as the matrix material in fiber composites is an ability to recycle and reuse the composite material. Thermoplastic polymers allow for the composite to be heated and reshaped multiple times without significantly degrading its properties. This recyclability enhances the sustainability of the material, reduces waste, and can lower the overall cost of production by enabling the reuse of materials.

In some embodiments, the method further includes applying notches to the fiber layer, the notches specifying an area of the fiber layer to be separated from the multilayer fiber composite material. This means that the process may involve creating specific indentations or cuts (notches) on the fiber layer. These notches may serve as predetermined points where the separation will occur, effectively marking the area to be separated from the rest of the composite material. The notches may help in reducing the bending stiffness at specific points, making it easier to initiate and propagate a crack along the desired path. This controlled separation may minimize the risk of unintended damage to the fiber layer, ensuring the integrity of the separated material and improving the efficiency and predictability of the separation process.

In some embodiments, the method includes separating the fiber layer from the multilayer fiber composite material at a rate of 1 m/s to 30 m/s. This means that the separation process of the fiber layer is performed at a velocity within this specified range. This high-speed separation may be designed to enhance the efficiency and effectiveness of the process. The separation at a rate of 1 m/s to 30 m/s may allow for rapid and efficient processing of the fiber layers. This high-speed separation can significantly reduce the time required for the process, making it more suitable for industrial applications where throughput and productivity are critical. Additionally, the controlled high-speed separation may help in maintaining the quality and integrity of the fiber layers, reducing the risk of damage that could occur at lower speeds by increasing intrinsically the stiffness of the matrix material.

According to a further aspect, the present disclosure proposes an apparatus for separating at least one fiber layer from a multilayer fiber composite material. The fiber layer is one of a plurality of fiber layers embedded in a matrix material of the fiber composite material. The apparatus comprises a mechanical gripping device configured to apply, during a separation of the fiber layer, a curvature to the fiber layer or to the multilayer fiber composite material around an axis parallel to a direction of crack propagation of the fiber layer from the multilayer fiber composite material.

The present disclosure provides solutions for applying a curvature to the fiber layer or the multilayer fiber composite material during separation, which may aid the separation process. The curvature can be constant or variable, convex or concave, and can be applied using a mechanical gripping device and/or a roller with a curved profile. The present disclosure also suggests applying a force perpendicular to the direction of crack propagation and adjusting the curvature based on feedback of a separation force or of an image analysis tool.

A technical problem addressed with the present disclosure is that the fiber layers may be very thin (thinner than 1 mm) and therefore very flexible. This flexibility leads even for low peeling forces to a strong curvature of the single layers around the axis parallel to the crack front, which might induce damage in the fibers and thus reduce the residual properties of the recovered material. In some cases, the peeling could even not be realized because the fibers would break because of the peeling load before the crack can be initiated or propagated. Applying a curvature of the single-layer or of the substrate around the peeling direction during peeling enables to curve the crack front and to increase the bending stiffness of the layer which enables to apply higher peeling forces without damaging the fibers.

### Brief description of the Figures

The present disclosure is illustrated by way of example and not limited in the accompanying figures in which like reference numerals indicate similar elements. Embodiments of the application will now be described with reference to the attached drawings:
- Figure 1: illustrates a principle of the imposed concave curvature of a peeled single-layer;
- Figure 2: illustrates the principle of the imposed convex curvature of a substrate;
- Figure 3: illustrates a principle of a gripping tool which is designed to move along the single-layer in the peeling process;
- Figure 4: illustrates a principle of imposing the curvature using a roller with curved profile;
- Figure 5: illustrates a principle of the imposed convex curvature of the peeled single-layer;
- Figure 6: illustrates a principle of a gripping tool with fixed parts (a) and mobile parts (b); and
- Figure 7: illustrates principle of partially gripping the layer or layers to be peeled to impose a curvature.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

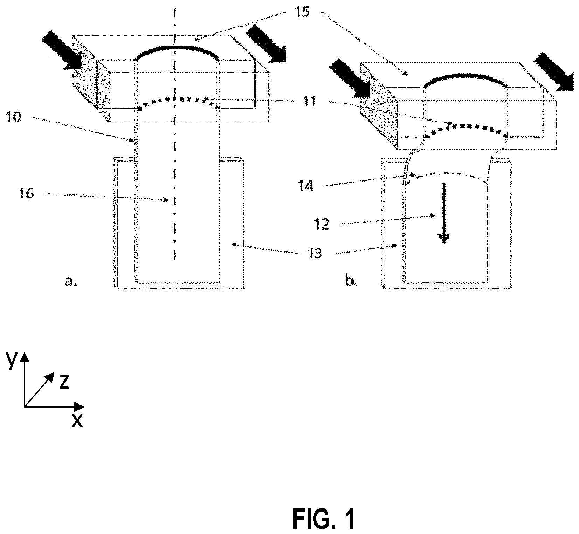

Fig. 1 schematically illustrates an embodiment of a method for separating at least one fiber layer 10 from a multilayer fiber composite material 13, which may also be referred to as substrate from which fiber layer 10 is to be separated from. The at least one fiber layer 10 to be separated may be a top or a bottom layer of a plurality of fiber layers embedded in a matrix material of the fiber composite material 13. In the example of Fig. 1, the at least one fiber layer 10 and multilayer fiber composite material 13 span an x-y-plane, respectively. The at least one fiber layer 10 is stacked on top of multilayer fiber composite material 13 in z-direction.

The method includes applying, during a separation of the fiber layer 10, a curvature 11 to the fiber layer 10 or to the multilayer fiber composite material 13. The curvature 11 is applied around an axis 16 parallel to a direction 12 of crack propagation (here: in (negative) y-direction). The curvature 11 is concave in the x-z-plane as the middle of the fiber layer 10 is further advanced in the (positive) z-direction than the lateral edges of the fiber layer 10. Axis 16 may also be regarded as longitudinal axis of fiber layer 10.

In Figs. 1a, b, a gripping tool 15 is used to apply a concave curvature 11 to the at least one fiber layer in. Gripping tool 15 is used to grip and manipulate the at least one fiber layer 10 during the separation process. Gripping tool 15 may have a specific geometry designed for effective gripping and separation of the at least one fiber layer 10 from the multilayer composite material 13. In the example of Fig. 1, gripping tool 15 comprises a curved profile that matches the curvature 11 to be applied to the fiber layer 10 or the multilayer composite material 13. In the illustrated embodiment, gripping tool 15 comprises a first (back) portion with a concave profile that matches the concave curvature to be applied to the fiber layer 10, and a second (front) counter portion with a convex profile that matches the concave curvature of the first (back) portion. The first and second curved portions of gripping tool 15 may be put together in z-direction, and a top end of the at least one fiber layer 10 may be gripped (clamped) between the first and second portion of gripping tool 15 along an entire width of the fiber layer 10.

While Fig. 1a shows the gripping tool 15 before applying a separation force, Fig. 1b shows the gripping tool 15 applying the separation force to the gripped (clamped) fiber layer 10 (here: in (negative) z-direction) perpendicular to the direction 12 of crack propagation (here: in y-direction) to assist the separation of the fiber layer 10 from the multilayer composite material 13. The separation force and the curvature 11 applied to the fiber layer 10 induces a curved crack front 14 between fiber layer 10 and multilayer composite material 13 and increases the bending stiffness of the material, which may enable to avoid failure of the fiber layer 10 for an equivalent peeling load. The effect of the separation force application is more pronounced in Fig. 1b, where the concave curvature 11 and the curved crack front 14 are visible, illustrating the concept of facilitating fiber layer separation through controlled deformation.

This curvature 11 can be applied either to a single or multiple fiber layer(s) 10 to be recovered or to the multilayer composite material or substrate 13 (rest of the material) if the bending stiffness of the material enables it. The curvature induces a curved crack front 14 and increases the bending stiffness of the material, which might enable to avoid the failure of the fiber layer 10 for an equivalent peeling load. In order to enable crack propagation, the substrate (multilayer composite material) 13 may be maintained in position, while the gripping tool 15 imposes motion perpendicular to the direction 12 of crack propagation leading to the layer separation. If a curvature is imposed on the fiber layer 10 to be separated, the gripping of the substrate 13 may be realized by any kind of gripping or fixing strategy (mechanical, adhesive, etc.). It can be done with or without imposing a curvature to the substrate 13.

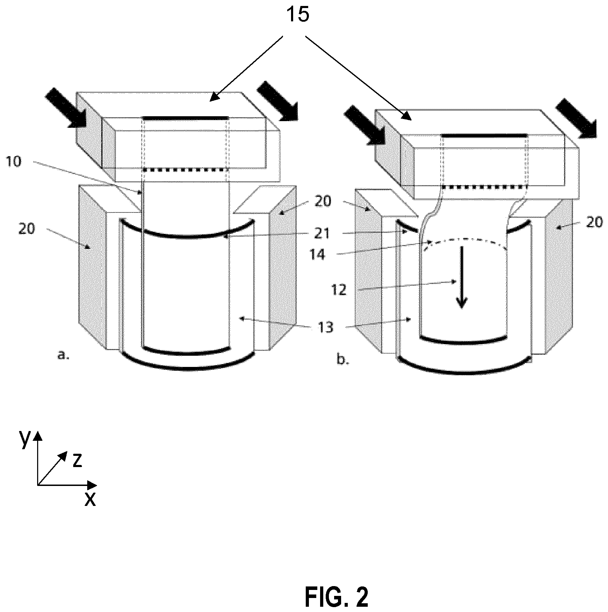

While Fig. 1 is directed to an embodiment with a concave curvature 11 (in z-direction) of the single-layer 10 imposed by layer gripping tool 15, **Fig. 2** schematically shows an embodiment with a convex curvature 21 of the substrate 13 imposed by a substrate gripping tool 20. The curvature 21 is convex in the x-z-plane as the lateral edges of the substrate 13 are further advanced in the positive z-direction than middle of the substrate 13.

In Fig. 2, fiber layer gripping tool 15 is used to grip (clamp) fiber layer 10 during the separation process without applying a curvature to fiber layer 10. In the example of Fig. 2, gripping tool 15 comprises a flat profile. In particular, fiber layer gripping tool 15 comprises a first (back) portion with flat profile and a second counter (front) portion with a flat profile. The first and second flat portions of fiber layer gripping tool 15 may be put together in z-direction and a top end of the fiber layer 10 may be gripped between the first and second portion of fiber layer gripping tool 15 along an entire width of the fiber layer 10.

In Fig. 2, substrate gripping tool 20 is used to apply a convex curvature 21 to the substrate 13 relative to the direction 12 of crack propagation. In other words, substrate gripping tool 20 may be used to bend the substrate 13 or a portion thereof around an axis parallel to the direction 12 of crack propagation. Substrate gripping tool 20 is used to grip and manipulate the substrate 13 or a portion thereof during the separation process. Substrate gripping tool 20 may have a specific geometry designed for effective gripping and separation of the fiber layer 10 from the substrate 13. For example, substrate gripping tool 20 may comprise a curved profile that matches the convex curvature 21 to be applied to the substrate 13. Substrate gripping tool 20 may comprise a first portion with a convex profile that matches the convex curvature 21 to be applied to substrate 13, and a second counter portion with a concave profile that matches the convex curvature of the first portion. The first and second portion of substrate gripping tool 20 may be put together in z-direction, and a lower end of substrate 13 may be gripped between the first and second portion of gripping tool 15.

In the embodiment illustrated in Fig. 2, substrate gripping tool 20 comprises a first portion (left) for gripping the substrate 13 along a first (left) side. Further, substrate gripping tool 20 comprises a second portion (right) for gripping the substrate 13 along a second (right) side. The first and second portions of substrate gripping tool 20 may be moved to bend substrate 13 around axis 16 while a top end of the fiber layer 10 may be gripped between the first and second portion of gripping tool 15 without applying a curvature to the top end of fiber layer 10.

While Fig. 2a shows the fiber layer gripping tool 15 before applying a separation force, Fig. 2b shows the fiber layer gripping tool 15 applying the separation force to the gripped (clamped) fiber layer 10 (here: in z-direction) perpendicular to the direction 12 of crack propagation (here: in y-direction) to assist the separation of the fiber layer 10 from the curved multilayer composite material 13. During separation, the fiber layer gripping tool 15 and the substrate gripping tool 20 may be moved relative to each other in z-direction. The separation force and the curvature 21 applied to the multilayer composite material 13 induces a curved crack front 14 between fiber layer 10 and multilayer composite material 13. The effect of the separation force application is more pronounced in Fig. 2b, where the convex curvature 21 and the curved crack front 14 are visible, illustrating the concept of facilitating fiber layer separation through controlled deformation.

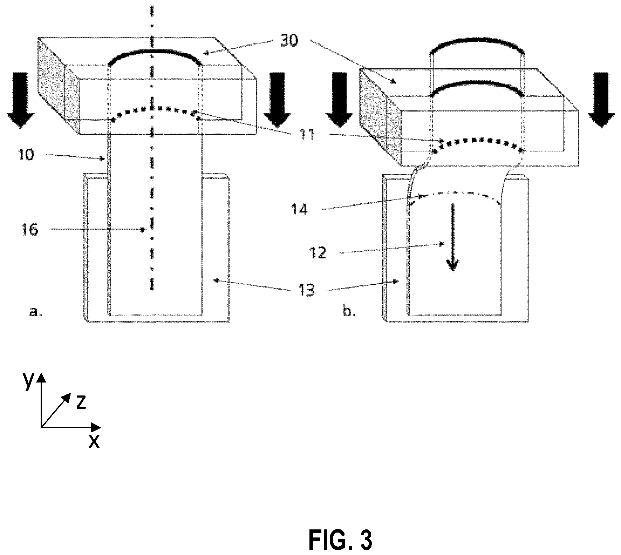

**Fig. 3** schematically illustrates an embodiment of a method for separating at least one fiber layer 10 from a multilayer fiber composite material 13, where the gripping tool 15 moves along the fiber layer 10 in (negative) y- direction (i.e., the direction of crack propagation) during the separation of the fiber layer 10. During separation, gripping tool 30 and the multilayer composite material 13 may be moved relative to each other both in y- and in z-direction.

The fiber layer 10 is depicted as a rectangular strip extending in the x-y-plane with main extension in y-direction (direction of crack propagation). It is located on top of the multilayer composite material 13, which acts as the substrate from which the fiber layer is being separated. As described above, gripping tool 30 comprises two main parts, forming a clamping mechanism for the fiber layer 10. Gripping tool 30 has a curved profile designed to match the curvature applied to the fiber layer. Gripping tool 30 grips the fiber layer 10 along its width, ensuring a secure hold during the separation process. The applied curvature is convex relative to the direction 12 of crack propagation. Curved crack front 14 extends in the direction of crack propagation. The longitudinal axis 16 of the fiber layer 10 is shown as a dashed line running vertically through the fiber layer 10 in y-direction. During the separation process, the gripping tool 30 and the fiber layer 10 can move relative to each other in y-direction. In the initial position, shown in Fig. 3a, the gripping tool 30 clamps the top end of the fiber layer 10. The curvature 11 is applied at the gripping point. In Fig. 3b, the gripping tool 30 applies the separation force, moving in the y-direction (downward) to initiate the separation of the fiber layer 10 from the multilayer composite material 13. This method may ensure a controlled and efficient separation of the fiber layer by combining mechanical gripping, curvature application, and relative motion in multiple directions.

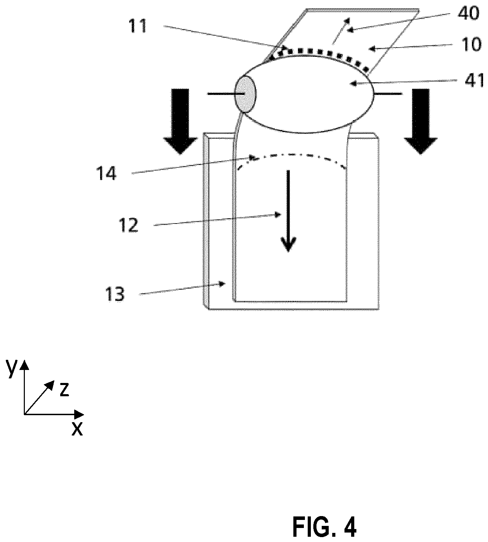

The gripping tool can comprise of one part working as a conforming tool aided by tension 40 in the layer as shown in **Fig. 4**, or of two parts working as a gripping tool 15 as shown in Fig. 1. This gripping tool 15 remains at a fixed position on the separated layer 10 as shown in Fig. 1 or can move as a mobile gripping tool 30 along the single layer 10 during the delamination process as shown in Fig. 3. In the case of a setup moving along the single layer to be recovered, rollers 41 with curved profiles (convex and/or concave) can be used as shown in Fig. 4. Thus, applying the curvature 11 to the fiber layer 10 or to the multilayer fiber composite material 13 may comprise using a roller 41 with a curved profile moving relatively to the fiber layer 10 in the direction (y-direction) of crack propagation during the separation of the fiber layer 10. Roller 41 may roll downwards or upwards about an axis extending in x-direction. At the same time, the separation force 40 is applied to the fiber layer 10 or to the multilayer fiber composite material 13 perpendicular to the direction 12 of crack propagation to assist the separation of the fiber layer 10.

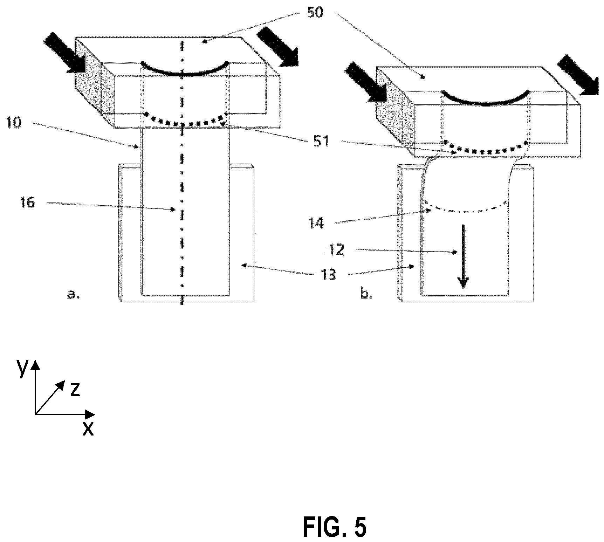

**Fig. 5** schematically illustrates another embodiment of a method for separating at least one fiber layer 10 from a multilayer fiber composite material 13. The method includes applying, during a separation of the fiber layer 10, a curvature 11 to the fiber layer 10 or to the multilayer fiber composite material 13. The curvature 51 is applied around axis 16 parallel to a direction 12 of crack propagation (here: in y-direction). Axis 16 may also be regarded as longitudinal axis of fiber layer 10. In the example of Fig. 5, the curvature 51 is convex.

In Figs.5a, b, a gripping tool 50 is used to apply the convex 51 to the at least one fiber layer relative to the direction 12 of crack propagation. Gripping tool 50 is used to grip and manipulate the at least one fiber layer 10 during the separation process. In the example of Fig. 5, gripping tool 50 comprises a curved profile that matches the curvature 51 to be applied to the fiber layer 10 or the multilayer composite material 13. In the illustrated embodiment, gripping tool 50 comprises a first (back) portion with a convex profile that matches the convex curvature 51 to be applied to the fiber layer 10, and a second (front) counter portion with a concave profile that matches the convex curvature of the first (back) portion. The first and second curved portions of gripping tool 50 may be put together in z-direction, and a top end of the at least one fiber layer 10 may be gripped (clamped) between the first and second portion of gripping tool 15 along an entire width of the fiber layer 10.

While Fig. 5a shows the gripping tool 50 before applying a separation force, Fig. 5b shows the gripping tool 50 applying the separation force to the gripped (clamped) fiber layer 10 (here: in z-direction) perpendicular to the direction 12 of crack propagation (here: in y-direction) to assist the separation of the fiber layer 10 from the multilayer composite material 13. The separation force and the curvature 51 applied to the fiber layer 10 induces a curved crack front 14 between fiber layer 10 and multilayer composite material 13. The effect of the separation force application is more pronounced in Fig. 5b, where the curvature 51 and the curved crack front 14 are visible, illustrating the concept of facilitating fiber layer separation through controlled deformation.

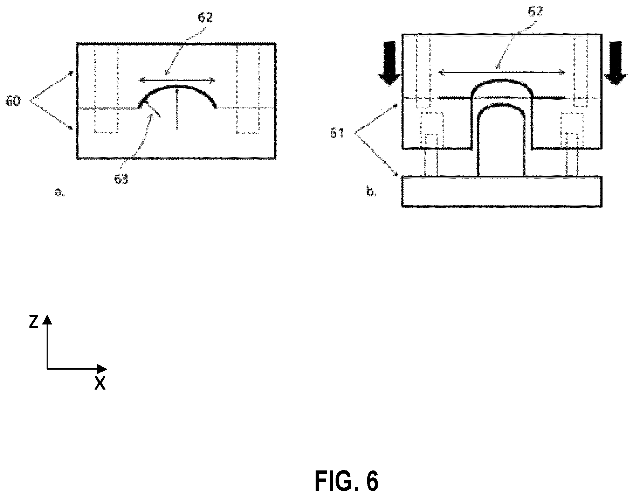

As shown in the top views of **Fig. 6**, the gripping setup can comprise two fixed parts 60 or comprise of two or more parts 61 which are mobile with respect to each other. The curvature can be constant or variable along the gripping width 62. The value of the local radius 63 of the curvature can vary from 10 mm to 1000 mm.

Fig. 6a shows an example where the top end of the at least one fiber layer 10 is gripped (clamped) between the first and second portions 60 of the gripping tool along an entire width of the fiber layer 10. Fig. 6b shows an example where the top end of the at least one fiber layer 10 is gripped (clamped) between the first and second portions 61 of the gripping tool only at the left and right sides of the fiber layer 10. The middle portion of the fiber layer 10 between the left and right sides is not gripped (clamped) between the first and second portions 61. Thus, the left and right sides do not experience a curvature. The middle portion may experience a curvature. The curvature of the middle portion of the fiber layer 10 may be adjusted using the second (front) portion 61, for example.

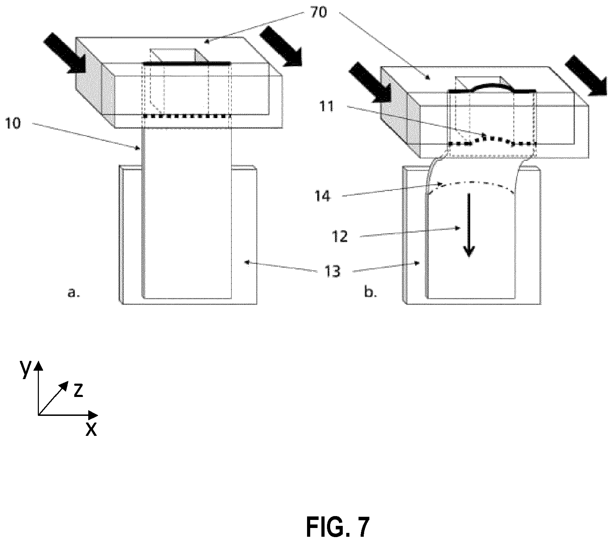

As shown in **Fig. 7**, another strategy to impose the curvature can be to use a gripping tool 70 which grips the single-layer 10 or multiple layers to be recovered only partially over its width so that the curvature 11 of the single layer 10 is generated automatically by the loading. In the illustrated embodiment, gripping tool 70 comprises a first (back) portion with a U-shaped profile and a second (front) counter portion with a flat profile. The first and second portions of gripping tool 70 may be put together in z-direction, and a top end of the at least one fiber layer 10 may be partially gripped (clamped) between the first and second portion of gripping tool 70 at the left and right sides of the fiber layer 10.

The gripped area of the specimen can be prepared for example by introducing notches parallel to the future crack propagation direction 12 in order to reduce its bending stiffness and enable the curvature imposed by the gripping tool.

The gripping strategy and device can be used at various speeds and loading regimes. It can be used for a continuous layer separation; in this case, the peeling speed can range from 1 mm/min to 100 mm/s, for example It can also be used in the case of impact-induced layer separation. In the case of impact induced delamination, a post-impact kinematic consisting in a rotational translation can be imposed to the gripping tool. The velocity of the impact can vary from 1 m/s up to 30 m/s and the impact energy can vary from 0.1 kJ up to 40 kJ per square meter of area of material to be separated. The gripping system can be used to realize layer separation at room temperature as well as at low and negative (until -80°C) or high temperature (up to 300°C).

To summarize, the present disclosure proposes a method and apparatus for separating at least one fiber layer from a multilayer fiber composite material. This includes controlling the curvature of the material during separation to enhance bending stiffness and allow higher peeling forces without damaging the fibers. The concept includes applying a curvature, either convex or concave, constant or variable, using a mechanical gripping device or a roller. The separation can be performed at controlled temperatures and speeds, ensuring efficient and high-quality fiber recovery. This approach aims to improve the recycling process of high-performance composite materials, particularly carbon fiber-based composites.

One advantage of the proposed solution is that it may enable to recover single-layers of carbon fiber based composite materials, which are economically the most valuable and which is not possible with straight gripping using an impact-induced delamination.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

### Reference Numbers

- 10: fiber layer
- 11: concave curvature
- 12: direction of crack propagation
- 13: multilayer fiber composite material, substrate
- 14: curved crack front
- 15: layer gripping tool
- 16: curvature axis
- 20: substrate gripping tool
- 21: convex curvature
- 30: mobile gripping tool
- 40: tension in the layer
- 41: roller
- 50: gripping tool
- 60: fixed part
- 61: mobile part
- 62: gripping width
- 63: local radius of curvature

## Claims

1. A method for separating at least one fiber layer (10) from a multilayer fiber composite material (13), wherein the fiber layer (10) is one of a plurality of fiber layers (10) embedded in a matrix material of the fiber composite material, the method comprising
applying, during a separation of the fiber layer (10), a curvature (11; 21) to the fiber layer (10) or to the multilayer fiber composite material (13) around an axis (16) parallel to a direction of crack propagation (12).

2. The method of claim 1, wherein the curvature (11; 21) applied to the fiber layer (10) or to the multilayer fiber composite material (13) is a concave curvature (11) relative to the direction of crack propagation (12).

3. The method of claim 1, wherein the curvature (11; 21) applied to the fiber layer (10) or to the multilayer fiber composite material (13) is a convex curvature (21) relative to the direction of crack propagation (12).

4. The method of any one of the previous claims, wherein the curvature (11; 21) applied to the fiber layer (10) or to the multilayer fiber composite material (13) is constant during the separation of the fiber layer (10).

5. The method of any one of claims 1 to 3, wherein the curvature (11; 21) applied to the fiber layer (10) or to the multilayer fiber composite material (13) is variable during the separation of the fiber layer (10).

6. The method of any one of the previous claims, comprising
applying a force to the fiber layer (10) or to the multilayer fiber composite material (13) perpendicular to the direction of crack propagation (12) to assist the separation of the fiber layer (10).

7. The method of any one of the previous claims, wherein the curvature is applied by a mechanical gripping device (15; 20) bending the fiber layer (10) or the multilayer composite material around the axis (16) parallel to the direction of crack propagation (12) during the separation.

8. The method of claim 7, comprising gripping the fiber layer (10) with the mechanical gripping device (15; 20) entirely or only partially along the width of the fiber layer (10).

9. The method of claim 7 or 8, wherein a position of the mechanical gripping device (15; 20) remains fixed in the direction of crack propagation (12) with respect to the fiber layer (10) during the separation of the fiber layer (10).

10. The method of claim 7 or 8, wherein the mechanical gripping device (15; 20) moves along the fiber layer (10) in the direction of crack propagation (12) during the separation of the fiber layer (10).

11. The method of claim 10, comprising applying the curvature to the fiber layer (10) or to the multilayer fiber composite material (13) using a roller (41) with a curved profile moving relatively to the fiber layer (10) in the direction of crack propagation (12) during the separation of the fiber layer (10).

12. The method of any one of the previous claims, further comprising
dynamically adjusting the curvature during the separation of the fiber layer (10) based on feedback of a separation force and/or of an image analysis tool.

13. The method of any one of the previous claims, further comprising
applying notches to the fiber layer (10), the notches specifying an area of the fiber layer (10) to be separated from the multilayer fiber composite material (13).

14. The method of any one of the previous claims, comprising separating the fiber layer (10) from the multilayer fiber composite material (13) at a rate of 1 m/s to 30 m/s.

15. An apparatus for separating at least one fiber layer (10) from a multilayer fiber composite material (13), wherein the fiber layer (10) is one of a plurality of fiber layers (10) embedded in a matrix material of the fiber composite material, the apparatus comprising
a mechanical gripping device (15; 20) configured to apply, during a separation of the fiber layer (10), a curvature to the fiber layer (10) or to the multilayer fiber composite material (13) around an axis (16) parallel to a direction of crack propagation (12) of the fiber layer (10) from the multilayer fiber composite material (13).
